# EUROPÄISCHE PATENTSCHRIFT

(11) **EP 0 992 184 B1**
(45) Veröffentlichungstag und Bekanntmachung des Hinweises auf die Patenterteilung: **15.05.2002**
(21) Anmeldenummer: 99117696.7
(22) Anmeldetag: 08.09.1999
(51) Int. Cl.: A01B 59/041

(54) **Vorrichtung zur Stabilisierung der beiden Unterlenker eines Traktors**
Tractor lower draft link stabilising device
Dispositif pour stabiliser les bras d'attelages inférieurs d'un tracteur

(30) Priorität: 06.10.1998 DE 19845968
(43) Veröffentlichungstag der Anmeldung: 12.04.2000
(73) Patentinhaber: GKN Walterscheid GmbH, 53797 Lohmar (DE)
(72) Erfinder: Adamek, Wolfgang, 53797 Lohmar (DE); Henseler, Heinrich, 53639 Königswinter (DE); Kirschbaum, Kurt, 53797 Lohmar (DE)
(74) Vertreter: Harwardt, Günther, Dipl.-Ing.

(56) Entgegenhaltungen:
- WO-A-95/20311
- DE-A- 19 537 555
- DE-A- 19 611 626

## Beschreibung

Die Erfindung betrifft eine Vorrichtung zur Stabilisierung der beiden Unterlenker eines Traktors, welche mittels eines hydraulischen Krafthebers betätigbar sind, mit je Unterlenker einer Seitenstrebe, welche jeweils einen einseitig wirkenden Hydraulikzylinder aufweisen, mit einer Schaltungsanordnung, welche vorsieht, daß die beiden Hydraulikzylinder der Seitenstreben mit dem hydraulischen Kraftheber leitungsmäßig zusammenschaltbar sind, wobei in der Verbindung Mittel zur gemeinsamen Trennung beider Hydraulikzylinder vom Kraftheber sowie Steuermittel zum Herstellen der Verbindung ab Erreichen einer einstellbaren Schwenklage der Unterlenker vorhanden sind.

Eine derartige Vorrichtung ist beispielsweise in der DE 195 37 555 A1 beschrieben. Dabei ist die Versorgung der Hydraulikzylinder der Seitenstreben parallel zur Versorgung des hydraulischen Krafthebers geschaltet. Der hydraulische Kraftheber verstellt die Unterlenker. Dies führt dazu, daß die Unterlenker in Abhängigkeit von der Hubkraft und der Position mittig zentriert werden. Eine Stabilisierung ist nur beim Anheben der Unterlenker gegeben. Die vorgesehene Lageschaltung sorgt dafür, daß beim Absenken die Hydraulikzylinder der Seitenstreben zusammen mit dem hydraulischen Kraftheber mit dem Rücklauf verbunden werden. Dabei ist beispielsweise beim Arbeiten am Hang durch die auftretenden hangabwärts gerichteten Kräfte ein Schrägstellen des angehängten Gerätes gegeben. Ferner ist eine Einstellung der Unterlenker auf das jeweilige Spreizmaß nicht oder nicht zuverlässig erreichbar, da eine wirksame Kraft von den Hydraulikzylindern auf die Unterlenker bei einem Anheben der Unterlenker nur dann erzeugt wird, wenn ein Gerät an den Unterlenkern aufgenommen ist.

Der Erfindung liegt die Aufgabe zu Grunde, die gattungsgemäße Vorrichtung so weiterauszugestalten, daß bei einer Betätigung des hydraulischen Krafthebers im Hubsinne eine Verstellung bzw. Zentrierung der Unterlenker zur Längsachse des Traktors auch dann erfolgt, wenn kein Gerät an den Unterlenkern aufgenommen ist.

Die Aufgabe wird erfindungsgemäß dadurch gelöst, daß zur leitungsmäßigen Zusammenschaltung der den beiden Hydraulikzylindern gemeinsamen Verbindungsleitung mit der Leitung, die zu der zum Kraftheber gehörenden einfach wirkenden Kolben-Zylinder-Einheit führt, ein Steuerventil vorgesehen ist, das drei Anschlüsse aufweist, von denen der erste Anschluß zur leitungsmäßigen Verbindung mit der zur Kolben-Zylinder-Einheit führenden Leitung dient, der zweite Anschluß zur Verbindung mit der Rücklaufleitung zum Tank dient und der dritte Anschluß zur Verbindung mit der Verbindungsleitung dient, daß in die zur Kolben-Zylinder-Einheit führenden Leitung hinter der leitungsmäßigen Verbindung zum Steuerventil ein erstes druckgesteuertes Rückschlagventil eingeschaltet ist, das bei Überschreitung eines vorbestimmten Druckes in Richtung zur Kolben-Zylinder-Einheit öffnet und in der Gegenrichtung schließt und in einer Umgehungsleitung zum ersten Rückschlagventil ein zweites Rückschlagventil vorgesehen ist, daß in Richtung zur Kolben-Zylinder-Einheit schließt und in der Gegenrichtung öffnet, und daß das Steuerventil zur Einnahme von drei Schaltstellungen ausgebildet ist, wobei in der ersten Stellung alle Anschlüsse voneinander getrennt sind, in der zweiten Stellung der erste Anschluß mit dem dritten Anschluß und in der dritten Stellung der dritte Anschluß mit dem zweiten Anschluß verbunden ist.

Von Vorteil bei dieser Ausbildung ist, daß bei Druckbeaufschlagung durch das druckgesteuerte Rückschlagventil ein Gegendruck aufgebaut wird, der ausreichend ist, um im Hydraulikzylinder der Seitenstreben einen genügend großen Druck zur Zentrierung der Unterlenker aufzubauen. Mit dem Steuerventil werden die Hydraulikzylinder mit der Druckquelle oder dem Rücklauf verbunden.

In Ausgestaltung der Erfindung ist vorgesehen, daß das erste Rückschlagventil bei einem Druck von ≥ 10 bar öffnet. Der so erzeugte Gegendruck von mindestens 10 bar ist ausreichend, eine sichere Einstellung der Unterlenker zu erreichen.

Um zu erreichen, daß darüber hinaus die Möglichkeit gegeben ist, die beiden Hydraulikzylinder gemeinsam von der Druckversorgung und dem Rücklauf zu trennen, ist vorgesehen, daß das Steuerventil in die erste Stellung überführt wird, wozu ein Hauptschalter dient, der in eine Steuerleitung zu einer davon beeinflußten Betätigung des Steuerventiles eingeschaltet ist. Im geöffneten Zustand wird eine Betätigung des Steuerventiles zur Einnahme der ersten Stellung bewirkt.

Ferner kann ein Lageschalter vorgesehen sein, der in die Steuerleitung, in der der Hauptschalter liegt, eingeschaltet ist und den Stromkreis erst dann schließt, wenn die Unterlenker eine vorbestimmbare Schwenklage eingenommen haben. Dieser veranlaßt ferner, daß bei Überschreitung der vorgegebenen Schwenklage eine Betätigung des Steuerventils zur Einnahme der zweiten Stellung erfolgt. Erfolgt ausgehend von der vorgenannten Stellung eine Unterschreitung der vorgegebenen Schwenklage oder beim Schließen des Hauptschalters die Feststellung, daß die vorgegebene Schwenklage (Entfernung vom Boden) unterschritten ist, wird eine Betätigung des Steuerventils zur Einnahme der dritten Stellung veranlaßt.

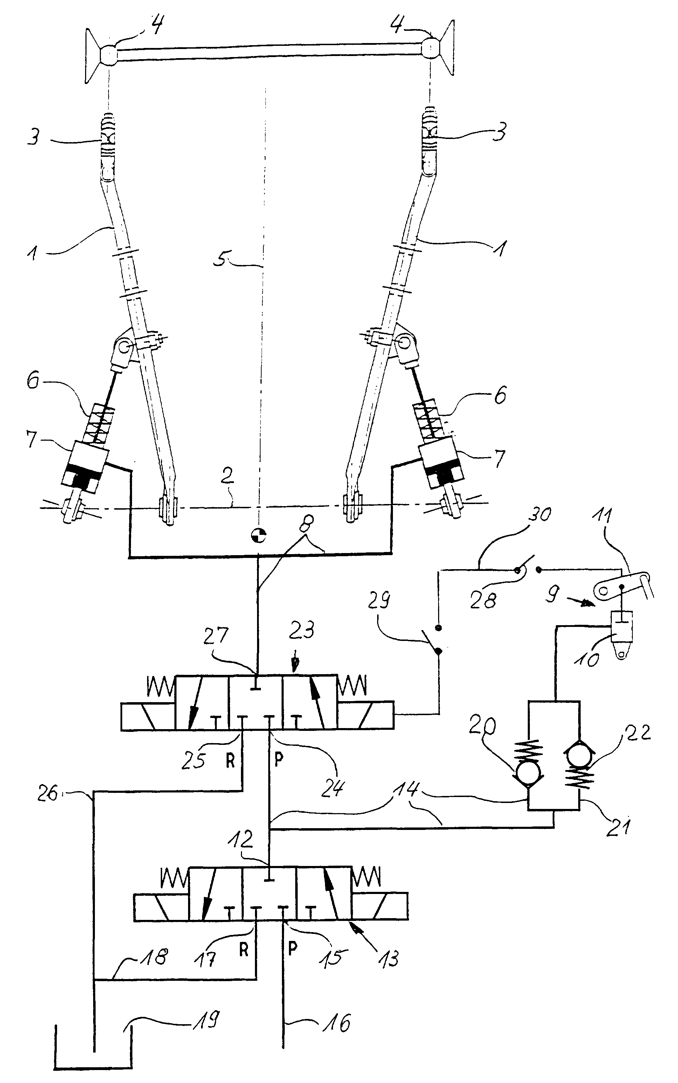

Ein Ausführungsbeispiel der Erfindung ist in der Zeichnung schematisch dargestellt und anhand derselben näher erläutert.

Aus der Zeichnungsfigur sind die beiden, mit seitlichem Abstand zur Längsachse 5 eines Traktors angordneten Unterlenker 1 ersichtlich, die mit ihrem einen Ende um eine Schwenkachse 2 am Traktorheck verschwenkbar sind, so daß deren freie Enden, die Kupplungshaken 3 tragen, dem Boden, auf dem der Traktor aufsteht, angenähert oder von diesem entfernt werden können. Die an ihren vom Traktor abstehenden Enden vorgesehenen Kupplungshaken 3 dienen zur Verbindung mit entsprechenden Kuppelmitteln 4 eines nicht im Detail dargestellten Gerätes. Das Gerät wird durch die Unterlenker 1 getragen. Zur Begrenzung der seitlichen Bewegung der beiden Unterlenker 1 dienen Seitenstreben 6. Diese sind mit einem Ende jeweils an einem Unterlenker 1 und mit ihrem anderen Ende schwenkbar mit einer Befestigungsstelle, die auf der Schwenkachse 2 liegt und am Traktor angeordnet ist, verbunden. Die beiden Seitenstreben 6 umfassen einfachwirkende Hydraulikzylinder 7, die gemeinsam an eine Verbindungsleitung 8 angeschlossen sind. Zur höhenmäßigen Verstellung der beiden Unterlenker 1 dient ein hydraulischer Kraftheber 9, der beispielsweise zwei im Abstand entsprechend den Unterlenkern 1 versetzt angeordnete Kraftarme 11 umfaßt, die um eine Achse gemeinsam schwenkbar angeordnet sind und die jeweils eine Hubstrebe tragen, die mit dem zugehörigen Unterlenker 1 verbunden ist. Zur Betätigung des Kraftarmes ist dem Kraftheber 9 eine einfachwirkende Kolben-Zylinder-Einheit 10 zugeordnet, deren kolbenseitiger Zylinderraum über eine Leitung 14 an einen ersten Anschluß 12 eines Schaltventils 13 anschließbar ist. Das Schaltventil 13 besitzt einen zweiten Anschluß 15 für eine Druckleitung 16, die von einer Druckquelle P mit Druckflüssigkeit gespeist wird. Ein dritter Anschluß 17 des Schaltventils 13 dient zur Verbindung mit einer drucklosen Rücklaufleitung 18 zum Tank 19. In der dargestellten Schaltstellung befindet sich das Schaltventil 13 in der Sperrstellung. In der zweiten Schaltstellung ist die Druckleitung 16 mit der Leitung 14 zur Kolben-Zylinder-Einheit 10 verbunden, während die Verbindung zur Rücklaufleitung 18 gesperrt ist. In der dritten Schaltstellung ist der erste Anschluß 12 mit dem Anschluß 17 zur Rücklaufleitung 18 verbunden, während die Druckleitung 16 gesperrt ist. In der zur Kolben-Zylinder-Einheit 10 führenden Leitung 14 ist ein druckgesteuertes Rückschlagventil 20 angeordnet, das in Richtung zur Kolben-Zylinder-Einheit 10 erst nach Überschreiten eines vorbestimmbaren Drucks von beispielsweise ≥ 10 bar auf Durchgang schaltet. Somit wird in dem vor dem ersten Rückschlagventil 20 liegenden Abschnitt der Leitung 14 ein entsprechender Druck aufgebaut. Das erste Rückschlagventil 20 sperrt die Leitung 14 für Druckflüssigkeit von der Kolben-Zylinder-Einheit 10 in Richtung zum Schaltventil 13. Ferner ist eine Umgehungsleitung 21 vorhanden, die das erste Rückschlagventil umgeht und beidendig mit der Leitung 14 verbunden ist. In der Umgehungsleitung 21 ist ein zweites Rückschlagventil 22 angeordnet, das in Richtung zur Kolben-Zylinder-Einheit 10 sperrt und in Richtung zum Schaltventil 13 öffnet. Der Druck, bei dem es öffnet, liegt wesentlich unter dem des ersten Rückschlagventils 20, und zwar bei ≤ 0,1 bar. Die Leitung 14 führt auch zu einem ersten Anschluß 24 eines Steuerventiles 23. Das Steuerventil 23 weist einen zweiten Anschluß 25 auf, der mit einer Rücklaufleitung 26 zum Tank 19 verbindbar ist. Das Steuerventil 23 weist ferner einen dritten Anschluß 27 auf, der mit der Verbindungsleitung 8 zu den beiden Hydraulikzylindern 7 verbindbar ist. Das Steuerventil 23 kann drei Schaltstellungen einnehmen. In der Grundstellung, so wie sie dargestellt ist, sind sämtliche Anschlüsse 24, 25, 27 gesperrt. Dies heißt, daß die beiden ersten Anschlüsse 24, 25 von dem Anschluß 27 zur Verbindungsleitung 8 getrennt sind. In der zweiten Schaltstellung ist vorgesehen, daß der erste Anschluß 24 mit dem dritten Anschluß 27 zur Verbindungsleitung 8 verbunden ist und der zweite Anschluß 25 zur Rücklaufleitung 26 gesperrt ist. In der dritten Schaltstellung ist der erste Anschluß 24 gesperrt und der dritte Anschluß 27 für die Verbindungsleitung 8 mit dem zweiten Anschluß 25, der zur Rücklaufleitung 26 führt, verbunden. Das Steuerventil 23 kann elektromagnetisch betätigt werden. Hierzu ist ein Steuerstromkreis vorgesehen, von dem nur eine von dem Kraftheber 9 über einen diesem zugeordneten Lageschalter 28 zum Steuerventil 23 führende Steuerleitung 30 dargestellt ist. Darüber hinaus ist in der Steuerleitung 30 zum Steuerventil 23 hin noch ein Hauptschalter 29 angeordnet. Mit dem Hauptschalter 29 kann die automatische Betätigung des Steuerventils 23 durch den Lageschalter 28 aus- oder eingeschaltet werden. Bei geöffnetem Hauptschalter 29 nimmt das Steuerventil 23 automatisch die erste Schaltstellung (Sperrstellung) ein. Der Lageschalter 28 erfaßt die jeweilige Schwenklage der Unterlenker 1, d.h. die jeweilige Höhenlage der Kupplungshaken 3 zum Boden. Er erfaßt, ob die eingestellte Schaltvorgabe bezüglich der Entfernung vom Boden überoder unterschritten wird.

Das Steuerventil 23 wird bei Betätigung des Schaltventils zur Verstellung der Unterlenker im Hubsinne, d.h. bei einer Verbindung des Anschlusses 15 des Schaltventils 13 mit dem Anschluß 12 und damit mit der Leitung 14 bei Überschreitung des eingestellten Druckes des ersten Rückschlagventil 20 und bei geschlossenem Hauptschalter 29 sowie Feststellung der Erreichung bzw. Überschreitung der vorbestimmten Schwenkstellung der Unterlenker, in eine Stellung überführt, bei der der erste Anschluß 24 des Steuerventils 23 mit dem dritten Anschluß 27 und damit mit der Verbindungsleitung 8 verbunden ist.

Die Hydraulikzylinder 7 der Seitenstreben beider Unterlenker 1 werden mit Druck beaufschlagt, so daß bei angehängtem Gerät eine Stabilisierung der Lage derselben zur Längsachse 5 bzw. eine Zentrierung zu dieser erfolgt.

Gleiches gilt für eine Hinführung der Unterlenker 1 auf das Spreizmaß, indem ein vollständiges Ausfahren der Hydraulikzylinder 7 erfolgt.

Bei einer Unterschreitung der eingestellten Schwenklage, wird das Steuerventil 23 in eine Stellung überführt, in der der dritte Anschluß 27 mit dem zweiten Anschluß 25 und damit mit der Rücklaufleitung 26 zum Tank 19 verbunden ist. In dieser Stellung können die Unterlenker 1 Seitenbewegungen frei ausführen. Zusätzlich ist bei geöffnetem Hauptschalter 29 eine selektive Betätigung des Steuerventils 23 von Hand möglich.

Bei geöffnetem Hauptschalter 29 nimmt das Steuerventil 30 die gezeigte Sperrstellung automatisch ein. Dies bedeutet, daß bei einer Betätigung des Schaltventils 13 bei geöffnetem Hauptschalter 29 nur die Unterlenker 1 über den Kraftheber 9 betätigt werden. Wird der Hauptschalter 29 geöffnet, wenn eine Druckbeaufschlagung der Hydraulikzylinder 7 erfolgt ist, d.h. die beiden Hydraulikzylinder 7 in der ausgefahrenen Position sind, werden diese von der Druckmittelversorgung getrennt, und die Unterlenker 1 bleiben zentriert.

Beim Senken der Unterlenker 1 erfolgt ein Rückfluß der Druckflüssigkeit aus der Kolben-Zylinder-Einheit 10 über das Rückschlagventil 22 in der Umgehungsleitung 21.

### Bezugszeichenliste

- 1: Unterlenker
- 2: Schwenkachse
- 3: Kupplungskaken
- 4: Kuppelmittel
- 5: Traktorlängsachse
- 6: Seitenstrebe
- 7: Hydraulikzylinder
- 8: Verbindungsleitung
- 9: Kraftheber
- 10: Kolben-Zylinder-Einheit
- 11: Kraftarm
- 12: erster Anschluß
- 13: Schaltventil
- 14: Leitung
- 15: zweiter Anschluß
- 16: Druckleitung
- 17: dritter Anschluß
- 18: Rücklaufleitung
- 19: Tank
- 20: erstes druckgesteuertes Rückschlagventil
- 21: Umgehungsleitung
- 22: zweites Rückschlagventil
- 23: Steuerventil
- 24: erster Anschluß
- 25: zweiter Anschluß
- 26: Rücklauf
- 27: dritter Anschluß
- 28: Lageschalter
- 29: Hauptschalter
- 30: Steuerleitung

- P: Druckquelle

## Patentansprüche

1. Vorrichtung zur Stabilisierung der beiden Unterlenker (1) eines Traktors, welche mittels eines hydraulischen Krafthebers (9) betätigbar sind, mit je Unterlenker (1) einer Seitenstrebe (6), welche jeweils einen einseitig wirkenden Hydraulikzylinder (7) aufweisen, mit einer Schaltungsanordnung, welche vorsieht, daß die beiden Hydraulikzylinder (7) der Seitenstreben (6) mit dem hydraulischen Kraftheber (9) leitungsmäßig zusammenschaltbar sind, wobei in der Verbindung Mittel zur gemeinsamen Trennung beider Hydraulikzylinder (7) vom Kraftheber (9) vorhanden sind,
**dadurch gekennzeichnet,**
**daß** zur leitungsmäßigen Zusammenschaltung der den beiden Hydraulikzylindern (7) gemeinsamen Verbindungsleitung (8) mit der Leitung (14), die zu der zum Kraftheber (9) gehörenden einfach wirkenden Kolben-Zylinder-Einheit (10) führt, ein Steuerventil (23) vorgesehen ist, das drei Anschlüsse (24, 25, 27) aufweist, von denen der erste Anschluß (24) zur leitungsmäßigen Verbindung mit der zur Kolben-Zylinder-Einheit (10) führenden Leitung (14) dient, der zweite Anschluß (25) zur Verbindung mit der Rücklaufleitung (17) zum Tank (19) dient und der dritte Anschluß (27) zur Verbindung mit der Verbindungsleitung (8) dient,
**daß** in die zur Kolben-Zylinder-Einheit (10) führende Leitung (14) hinter der leitungsmäßigen Verbindung zum Schaltventil (13) ein erstes druckgesteuertes Rückschlagventil (20) eingeschaltet ist, das bei Überschreitung eines vorbestimmten Druckes in Richtung zur Kolben-Zylinder-Einheit (10) öffnet und in der Gegenrichtung schließt, und in einer Umgehungsleitung (21) zum ersten Rückschlagventil (20) ein zweites Rückschlagventil (22) vorgesehen ist, das in Richtung zur Kolben-Zylinder-Einheit (10) schließt und in der Gegenrichtung öffnet,
und **daß** das Steuerventil (23) zur Einnahme von drei Schaltstellungen ausgebildet ist, wobei in der ersten Stellung alle Anschlüsse (24, 25, 27) voneinander getrennt sind, in der zweiten Stellung der erste Anschluß (24) mit dem dritten Anschluß (27) und in der dritten Stellung der dritte Anschluß (27) mit dem zweiten Anschluß (25) verbunden ist.

2. Vorrichtung nach Anspruch 1,
**dadurch gekennzeichnet,**
**daß** das erste Rückschlagventil (20) bei einem Druck von ≥ 10 bar öffnet.

3. Vorrichtung nach Anspruch 1,
**dadurch gekennzeichnet,**
**daß** in eine Steuerleitung (30) zur Betätigung des Steuerventils (23) ein Hauptschalter (29) eingefügt ist, der in geöffnetem Zustand veranlaßt, daß das Steuerventil (23) seine erste Stellung einnimmt.

4. Vorrichtung nach Anspruch 3,
**dadurch gekennzeichnet,**
**daß** in die Steuerleitung (30) zusätzlich ein einstellbarer Lageschalter (28) eingefügt ist, der die jeweilige Schwenklage der Unterlenker (1) erfaßt und die Steuerleitung (30) erst bei Erreichen der vorgegebenen Schwenklage schließt und der eine Betätigung des Steuerventils (23) zur Einnahme der zweiten Stellung bei Überschreitung der vorgegebenen Schwenklage und zur Einnahme der dritten Stellung bei Unterschreitung der vorgegebenen Schwenklage im Verhältnis zum Boden veranlaßt.

## Claims

1. A device for stabilising the two lower steering arms (1) of a tractor, which lower steering arms (1) can be actuated by a hydraulic power lever (9), having a side strut (6) per lower steering arm (1), which side struts (6) each comprise a single-acting hydraulic cylinder (7); having a switching device which ensures that the two hydraulic cylinders (7) of the side struts (6) can be connected line-wise to the hydraulic power lever (9), said connection containing means for jointly separating both hydraulic cylinders (7) from the power lever (9),
**characterised in**
**that**, for line-wise connecting the connecting line (8) shared by the two hydraulic cylinders (7) to the line (14) leading to the single-acting piston-cylinder unit (10) associated with the power lever (9), there is provided a control valve (23) which comprises three ports (24, 25, 27), of which the first port (24) serves for establishing a line connection with the line (14) leading to the piston-cylinder unit (10), the second port (25) serving to establish a connection with the return line (17) leading to the tank (19) and the third port (27) serving to establish a connection with the connecting line (8);
**that**, into the line (14) leading to the piston-cylinder unit (10), behind the line connection with the switching valve (13), there is incorporated a first pressure-controlled return valve (20) which, if a predetermined pressure is exceeded, opens in the direction of the piston-cylinder unit (10) and closes in the opposite direction and that in a bypass line (21) leading to the return valve (20), there is provided a second return valve (22) which closes in the direction of the piston-cylinder unit (10) and opens in the opposite direction;
and **that** the control valve (23) is designed to assume three switching positions, with all ports (24, 25, 27) being disconnected from one another in the first position, with the first port (24) being connected to the third port (27) in the second position and with the third port (27) being connected to the second port (25) in the third position.

2. A device according to claim 1,
**characterised in**
**that** the first return valve (20) opens at a pressure of ≥ 10 bar.

3. A device according to claim 1,
**characterised in**
**that** a main switch (29) is incorporated into a control line (30) for actuating the control valve (23), which main switch (29), when in the open condition, causes the control valve (23) to assume its first position.

4. A device according to claim 3,
**characterised in**
**that** into the control line (30), there is additionally incorporated a settable position switch (28) which records the respective pivot positions of the lower steering arms (1), which closes the control line (30) only after a predetermined pivot position has been reached and which causes the control valve (23) to be actuated to assume the second position when a predetermined pivot position has been exceeded, and to assume a third position when the predetermined pivot position relative to the ground has not been reached.

## Revendications

1. Dispositif pour stabiliser les deux bras inférieurs (1) d'un tracteur, qui sont susceptibles d'être actionnés au moyen d'un vérin hydraulique (9), comportant pour chaque bras inférieur (1) une traverse latérale (6) qui comprend un cylindre hydraulique respectif (7) à simple effet, comportant un agencement de commutation qui assure que les deux cylindres hydrauliques (7) des traverses latérales (6) peuvent être interconnectés en termes de liaison au vérin hydraulique (9), des moyens pour la séparation commune des deux cylindres hydrauliques (7) vis-à-vis du vérin hydraulique (9) étant prévus dans la liaison,
**caractérisé en ce que**
pour l'interconnexion en termes de liaison de la conduite de liaison (8) commune aux deux cylindres hydrauliques (7) et de la conduite (14) menant à l'unité à piston-et-cylindre (10) à simple effet et faisant partie du vérin (9), il est prévu une soupape de commande (23) qui comprend trois raccords (24, 25, 27) dont le premier raccord (24) sert à la liaison avec la conduite (14) menant vers l'unité à piston-et-cylindre (10), le deuxième raccord (25) sert à la liaison avec la conduite de retour (17) vers le réservoir (19), et le troisième raccord (27) sert à la liaison avec la conduite de liaison (8), **en ce qu'**un premier clapet anti-retour (20) est interposé dans la conduite (14) menant vers l'unité à piston-et-cylindre (10) derrière la liaison avec la soupape de commutation (13) et s'ouvre en direction de l'unité à piston-et-cylindre (10) lors du dépassement d'une pression prédéterminée et se ferme en direction opposée, **en ce qu'**un deuxième clapet anti-retour (22) est prévu dans une conduite (21) de contournement du premier clapet anti-retour (20) et se ferme en direction de l'unité à piston-et-cylindre (10) et s'ouvre dans la direction opposée,
et **en ce que** la soupape de commande (23) est réalisée pour occuper trois positions de commutation, telles que tous les raccords (24, 25, 27) sont séparés les uns des autres dans la première position, le premier raccord (24) est relié au troisième raccord (27) dans la deuxième position, et le troisième raccord (27) est relié au deuxième raccord (25) dans la troisième position.

2. Dispositif selon la revendication 1, **caractérisé en ce que** le premier clapet anti-retour (20) s'ouvre à une pression ≥ 10 bar.

3. Dispositif selon la revendication 1, **caractérisé en ce qu'**un commutateur principal (29) est agencé dans une conduite de commande (30) pour actionner la soupape de commande (23), qui a pour effet que dans l'état ouvert la soupape de commande (23) occupe sa première position.

4. Dispositif selon la revendication 3, **caractérisé en ce qu'**un commutateur de position réglable (28) est agencé en supplément dans la conduite de commande (30), qui détecte la position de pivotement respective des bras inférieurs (1) et qui referme la conduite de commande (30) uniquement lorsque la position de pivotement prédéterminée est atteinte, et qui provoque un actionnement de la soupape de commande (23) pour occuper la deuxième position lors du dépassement de la position de pivotement prédéterminée, et pour occuper la troisième position lors du passage au-dessous de la position de pivotement prédéterminée par rapport au sol.
